# EUROPÄISCHE PATENTSCHRIFT

(11) **EP 0 708 007 B1**
(45) Veröffentlichungstag und Bekanntmachung des Hinweises auf die Patenterteilung: **21.04.1999**
(21) Anmeldenummer: 95113655.5
(22) Anmeldetag: 31.08.1995
(51) Int. Cl.: B60T 17/00

(54) **Druckluftgerät mit Geräuschdämpfer, insbesondere Bremsgerät für Druckluft-Bremsanlagen von Kraftfahrzeugen**
Air pressure device with silencer, especially brake device for compressed-air braking systems of motor vehicles
Dispositif de pression d'air à silencieux, notamment dispositif de freinage pour installations de frein à air comprimé des véhicules automobiles

(30) Priorität: 19.10.1994 DE 4437315
(43) Veröffentlichungstag der Anmeldung: 24.04.1996
(73) Patentinhaber: ROBERT BOSCH GMBH, 70442 Stuttgart (DE)
(72) Erfinder: Deja, Siegmund, D-71691 Freiberg (DE); Schaffert, Eberhard, Dipl.-Ing., D-71229 Leonberg (DE); Roether, Friedbert, D-74389 Cleebronn (DE)

(56) Entgegenhaltungen:
- EP-A- 0 132 696
- EP-A- 0 596 220

## Beschreibung

### Stand der Technik

Die Erfindung geht aus von einem Druckluftgerät nach der Gattung des Patentanspruchs.

Es ist schon ein solches Druckluftgerät bekannt, auf dessen Außenluftanschluß ein Geräuschdämpfer aufgesteckt ist (DE 40 40 278 A1). Hierzu ist ein Anschlußstutzen des Geräuschdämpfers mit Längsschlitzen versehen, um federnde Abschnitte zu bilden, welche einen umlaufenden Wulst am Außenluftanschluß des Druckluftgeräts übergreifen. Ein die Abschnitte des Anschlußstutzens umschließender Runddrahtring sichert den Geräuschdämpfer gegen ungewolltes Lösen vom Druckluftgerät. Die Verbindung von Druckluftgerät und Geräuschdämpfer erfüllt ihren Zweck; sie ist jedoch wegen des zur Sicherung der Verbindung erforderlichen Runddrahtrings kostenaufwendig und schließt Montagefehler nicht aus.

Außerdem ist es bei Druckluftgeräten bekannt, Bajonettverbindungen einzusetzen, beispielsweise um ein Zylindergehäuse und den Zylinderboden eines Bremszylinders zusammenzufügen (DE 35 43 365 A1). Diese Verbindung erfordert eine zusätzliche Drehsicherung, welche aus einem Blechwinkel besteht, der mit einer Schraube am Zylinderboden befestigt ist und in eine Ausnehmung des Zylindergehäuses eingreift. Auch hier treten die oben genannten Nachteile auf.

### Vorteile der Erfindung

Das erfindungsgemäße Druckluftgerät mit den kennzeichnenden Merkmalen des Patentanspruchs hat demgegenüber den Vorteil, daß die verwendete Bajonettverbindung keiner zusätzlichen, verlierbaren Sicherungselemente bedarf. Da das Sicherungselement Lasche am Geräuschdämpfer angeformt ist, erleichtert dies die Montage des Geräuschdämpfers am Druckluftgerät. Montagefehler sind weitgehend ausgeschlossen. Darüberhinaus sind zur Montage, insbesondere zum Herstellen der Drehsicherung zwischen den beiden Teilen, keine Werkzeuge erforderlich.

Durch die in den Unteransprüchen aufgeführten Maßnahmen sind vorteilhafte Weiterbildungen und Verbesserungen des im Patentanspruch angegebenen Druckluftgeräts möglich.

Mit der im Anspruch 2 angegebenen Ausgestaltung der Erfindung wird auf einfache Weise die Möglichkeit geschaffen, durch Angriff an der leicht zugänglichen Lasche die Bajonettverbindung zu lösen. Der Austausch der Geräuschdämpfers ist damit auch ohne Werkzeug möglich.

Da die Lasche von der Mantelfläche eines Kreiszylinders ausgeht, wird durch die Maßnahme nach Anspruch 3 deren elastische Verformbarkeit verbessert.

Die Weiterbildung der Erfindung nach Anspruch 5 hat den Vorteil, daß der in die Bohrung des Druckluftgeräts eingesteckte Geräuschdämpfer in bezüglich seiner Längsachse beiden Drehrichtungen in seine Endstellung bewegbar ist. Dies erleichtert die Montage und den Austauschvorgang des Geräuschdämpfers.

### Zeichnung

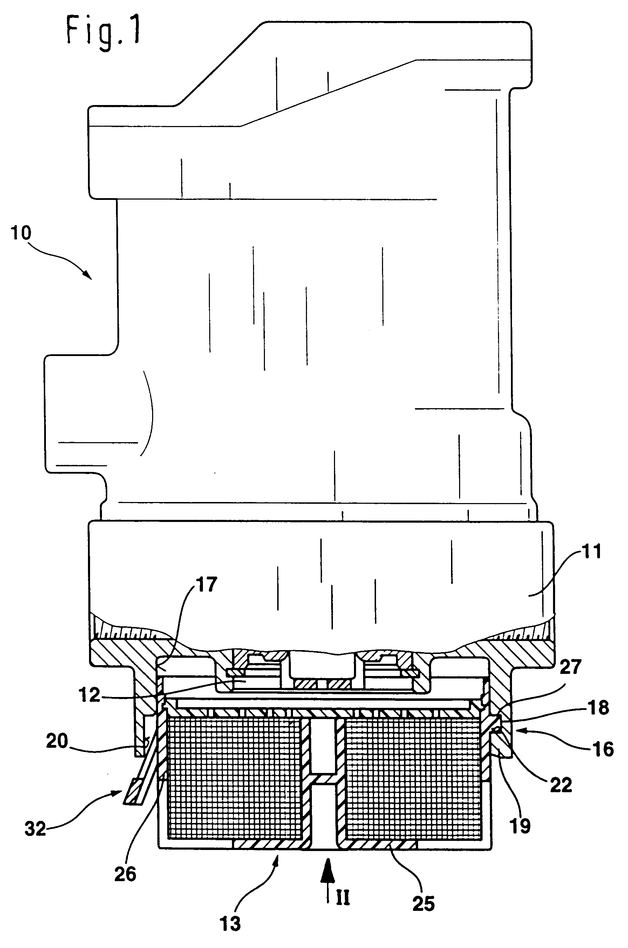

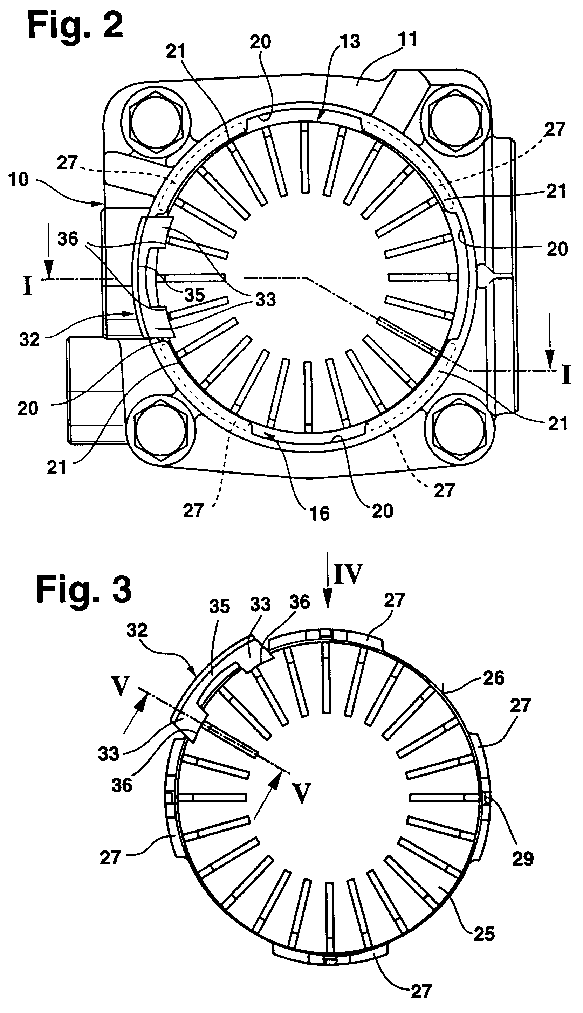

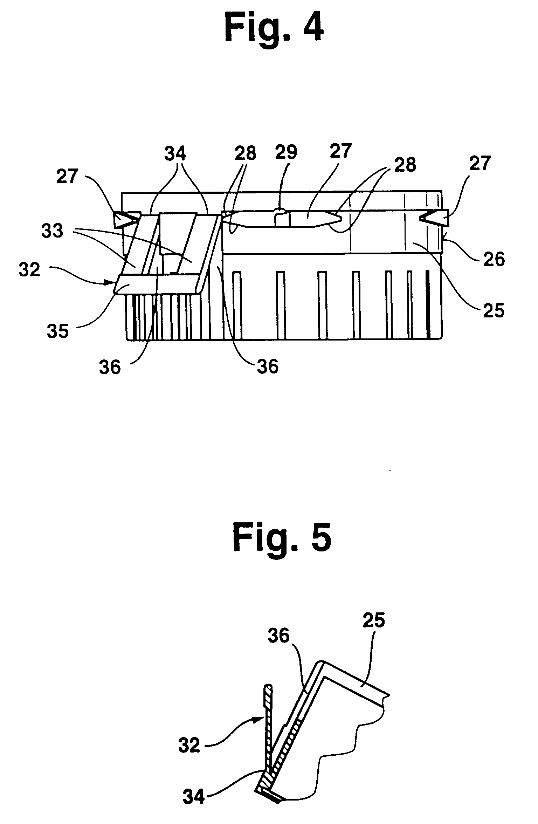

Ein Ausführungsbeispiel der Erfindung ist in der Zeichnung vereinfacht dargestellt und in der nachfolgenden Beschreibung näher erläutert. Es zeigen Figur 1 ein Druckluftgerät in Seitenansicht mit einem Geräuschdämpfer im Schnitt entlang dem Linienzug I-I in Figur 2, Figur 2 eine Ansicht von Geräuschdämpfer und Druckluftgerät in Richtung des Pfeiles II in Figur 1 gesehen, Figur 3 eine Ansicht entsprechend Figur 2 des Gehäuses des Geräuschdämpfers, Figur 4 eine Seitenansicht des Gehäuses und Figur 5 einen Schnitt durch das Gehäuse entlang der Linie V-V in Figur 3.

### Beschreibung des Ausführungsbeispiels

Ein in Figur 1 dargestelltes Druckluftgerät 10, z. B. ein Relaisventil für Druckluft-Bremsanlagen von Kraftfahrzeugen, weist ein Gehäuseteil 11 mit einem Außenluftanschluß 12 auf, von dem Druckluft unter Überwindung eines am Gehäuseteil befestigten Geräuschdämpfers 13 an die Atmosphäre abgebbar ist.

Der Geräuschdämpfer 13 ist mit einer Bajonettverbindung 16 lösbar am Druckluftgerät 10 befestigt. Hierzu ist der Gehäuseteil 11 mit einer nach unten offenen Bohrung 17 versehen, welche nahe ihrer Mündung eine Innenumfangsnut 18 aufweist. Die mündungsseitige Nutbegrenzungswand 19 ist durch vier in gleichmäßiger Teilung angeordnete, sich jeweils über etwa 45° erstreckende Ausnehmungen 20 in vier Abschnitte 21 unterbrochen (Figur 2). Im Bereich der Ausnehmungen 20 liegt somit die Innenumfangsnut 18 in ihrer radialen Tiefe frei, während sie im Bereich der Abschnitte 21 Hinterschneidungen 22 der Bajonettverbindung bildet.

Der Geräuschdämpfer 13 hat ein im wesentlichen kreiszylindrisches Gehäuse 25 mit am Gehäusemantel 26 angeformten vier Vorsprüngen 27 (Figuren 3 und 4). Diese sind in gleichmäßiger Teilung angeordnet und erstrecken sich über jeweils etwa 45° des Gehäuseumfangs. Beim Einführen des Geräuschdämpfers 13 in die Bohrung 17 des Gehäuseteils 11 durchgreifen die Vorsprünge 27 die Ausnehmungen 20 und stützen sich auf der mündungsabgewandten Seite der Innenumfangsnut 18 ab. Durch Verdrehen des Geräuschdämpfers 13 im oder entgegen dem Uhrzeigersinn sind die Vorsprünge 27 in die Hinterschneidungen 22 bewegbar. Für den erleichterten Eingriff in die Hinterschneidungen 22 weisen die Vorsprünge 27 beidendig Einlaufschrägen 28 auf. Außerdem sind die Vorsprünge 27 im mittleren Bereich mit jeweils einer Federzunge 29 versehen, um axial spielfreien Sitz des Geräuschdämpfers 13 im Gehäuseteil 11 zu erzielen.

Zum Sichern und Lösen der Bajonettverbindung 16 ist am Gehäusemantel 26 des Geräuschdämpfers 13 eine im wesentlichen radial auffedernde Lasche 32 angeformt. Diese besitzt zwei Schenkel 33, welche mit ihrer Wurzel 34 zwischen zwei Vorsprüngen 27 unter einem spitzen Winkel zur Längsachse des Geräuschdämpfers 13 vom Gehäusemantel 26 ausgehen (Figur 5). An ihrem freien Ende sind die Schenkel 33 durch einen Steg 35 miteinander verbunden. Die Lasche 32 ist somit durchbrochen, was ihre elastische Verformbarkeit begünstigt. In das Gehäuse 25 des Geräuschdämpfers 13 sind mantelseitig Eintiefungen 36 eingeformt, um die Schenkel 33 aufzunehmen, wenn die Lasche 32 durch Angriff am Steg 35 an das Gehäuse 25 angelegt wird.

Bei der Montage des Geräuschdämpfers 13 am Druckluftgerät 10 wird das Gehäuse 25 derart in die Bohrung 17 des Gehäuseteils 11 eingeführt, daß die Vorsprünge 27 die Ausnehmungen 20 durchgreifen. Dabei treffen die Schenkel 33 der Lasche 32 auf die Nutbegrenzungswand 19 und werden radial in die Eintiefung 36 zurückgedrängt. Durch Verdrehen des Schalldämpfers 13 in beliebiger Drehrichtung gelangen die Vorsprünge 27 in die Hinterschneidungen 22. Nach dem Verdrehen um 45° sind außerdem die beiden Schenkel 33 in eine Ausnehmung 20 eingetreten und radial aufgefedert, wie dies in Figur 1 erkennbar ist. In dieser Stellung verhindert die Lasche 32 ein unbeabsichtigtes Lösen des Geräuschdämpfers 13, da die aufgefederten Schenkel 33 bei geringfügiger Verdrehung des Geräuschdämpfers 13 auf die Nutbegrenzungswand 19 treffen und ein weiteres Drehen blockieren.

Zum Lösen des Geräuschdämpfers 13 vom Druckluftgerät 10 ist es erforderlich, die elastisch verformbare Lasche 20 manuell gegen die Nutbegrenzungswand 19 zu drücken, so daß die beiden Schenkel 33 in die Eintiefungen 36 eingreifen. Nun ist der Geräuschdämpfer 13 in die Stellung drehbar, in der er unter Durchtritt der Vorsprünge 27 durch die Ausnehmungen 20 vom Gehäuseteil 11 axial abziehbar ist.

Abweichend vom Ausführungsbeispiel ist es auch möglich, den Geräuschdämpfer 13 mit mehr als einer Lasche 32 auszustatten.

## Patentansprüche

1. Druckluftgerät (10) mit Geräuschdämpfer (13), insbesondere Bremsgerät für Druckluft-Bremsanlagen von Kraftfahrzeugen, mit einer lösbaren Verbindung zwischen dem Druckluftgerät und dem Geräuschdämpfer, welche formschlüssig ineinandergreifen,
gekennzeichnet durch die Merkmale:
- die lösbare Verbindung ist als Bajonettverbindung (16) ausgebildet, bei welcher der Geräuschdämpfer (13) umfangsseitig seines Gehäusemantels (26) wenigstens zwei Vorsprünge (27) und das Druckluftgerät (10) in einer Gehäusebohrung (17) zwei die Vorsprünge (27) aufnehmende Hinterschneidungen (22) hat, welche axial gegen die Mündung der Bohrung (17) durch wenigstens eine Ausnehmung (20) für den Durchgriff des Vorsprungs (27) geöffnet sind,
- der Geräuschdämpfer (13) weist eine umfangsseitig am Gehäusemantel (26) angeformte, im wesentlichen radial auffedernde Lasche (32) auf, welche bei hergestellter Verbindung in eine Ausnehmung (20) des Druckluftgeräts (10) eingreift.

2. Druckluftgerät nach Anspruch 1, dadurch gekennzeichnet, daß die Lasche (32) mit ihrer Wurzel (34) umfangsseitig neben dem Vorsprung (27) vom Gehäusemantel (26) des Geräuschdämpfers (13) ausgeht und sich mit ihrem freien Ende über die Mündung der Bohrung (17) des Druckluftgeräts (10) erstreckt.

3. Druckluftgerät nach Anspruch 2, dadurch gekennzeichnet, daß die Lasche (32) zwischen ihrer Wurzel (34) und dem freien Ende durchbrochen ist.

4. Druckluftgerät nach Anspruch 2, dadurch gekennzeichnet, daß der Gehäusemantel (26) des Geräuschdämpfers (13) mit einer die eingefederte Lasche (32) aufnehmenden Eintiefung (36) versehen ist.

5. Druckluftgerät nach Anspruch 1, dadurch gekennzeichnet, daß der Geräuschdämpfer (13) mit mehreren über seinen Umfang verteilten Vorsprüngen (27) und mit wenigstens einer mittig zwischen zwei benachbarten Vorsprüngen (27) angeordneten Lasche (32) ausgestattet ist.

6. Druckluftgerät nach Anspruch 5, dadurch gekennzeichnet, daß am Geräuschdämpfer (13) vier Vorsprünge (27) in gleichmäßiger Teilung über jeweils etwa 45° des Gehäusemantelumfangs angeordnet sind, wobei die wenigstens eine Lasche (32) den Abstand zwischen zwei Vorsprüngen (27) im wesentlichen ausfüllt.

## Claims

1. Compressed-air device (10) having a silencer (13), in particular a brake device for compressed-air brake systems of motor vehicles, having a releasable connection between the compressed-air device and the silencer which interlock in a form-fitting manner,
characterized by the following features:
- the releasable connection is designed as a bayonet-type connection (16) in which the silencer (13) has at least two projections (27) on the circumference of its housing casing (26), and the compressed-air device (10) has, in a housing bore (17), two undercuts (22) which receive the projections (27) and are open axially towards the mouth of the bore (17) through at least one recess (20) for the passage of the projection (27),
- the silencer (13) has a clip (32) which is integrally formed on the circumference of the housing casing (26), springs open essentially radially and, when a connection is produced, engages into a recess (20) of the compressed-air device (10).

2. Compressed-air device according to Claim 1, characterized in that the clip (32) emerges by means of its base (34) on the circumference next to the projection (27) of the housing casing (26) of the silencer (13) and extends with its free end over the mouth of the bore (17) of the compressed-air device (10).

3. Compressed-air device according to Claim 2, characterized in that the clip (32) is broken through between its base (34) and the free end.

4. Compressed-air device according to Claim 2, characterized in that the housing casing (26) of the silencer (13) is provided with a cavity (36) which receives the spring-deflected clip (32).

5. Compressed-air device according to Claim 1, characterized in that the silencer (13) is fitted with a plurality of projections (27) distributed over its circumference, and with at least one clip (32) which is arranged in the centre between two adjacent projections (27).

6. Compressed-air device according to Claim 5, characterized in that four projections (27) are arranged on the silencer (13) at a uniform spacing over in each case approximately 45° of the circumference of the housing casing, the at least one clip (32) essentially filling the distance between two projections (27).

## Revendications

1. Appareil à air comprimé (10) avec un amortisseur de bruit (13), en particulier appareil de freinage pour des installations de freinage à air comprimé pour véhicules à moteur, avec une liaison amovible comprise entre l'appareil à air comprimé et l'amortisseur de bruit, qui viennent en prise l'un dans l'autre par une liaison par la forme,
caractérisé en ce que
- la liaison amovible est constituée sous la forme d'une liaison à baïonnette (16), dans laquelle l'amortisseur de bruit (13) a du côté du pourtour de son enveloppe de boîtier (26) au moins deux saillies (27) et l'appareil à air comprimé (10) a dans un alésage de boîtier (17) deux contre-dépouilles (22) qui reçoivent les saillies (27), contre-dépouilles qui sont ouvertes axialement vers l'embouchure de l'alésage (17) par au moins un évidement (20) pour le passage de la saillie (27),
- l'amortisseur de bruit (13) présente une agrafe (32) qui se détend sensiblement radialement, formée du côté de son pourtour sur l'enveloppe de boîtier (26), agrafe qui, lors de l'établissement de la liaison, vient en prise dans un évidement (20) de l'appareil à air comprimé (10).

2. Appareil à air comprimé selon la revendication 1,
caractérisé en ce que
l'agrafe (32) part au niveau de sa racine (34) du côté de son pourtour à côté de la saillie (27) de l'enveloppe du boitier (26) de l'amortisseur de bruit (13) et s'étend par son extrémité libre sur l'embouchure de l'alésage (17) de l'appareil à air comprimé (10).

3. Appareil à air comprimé selon la revendication 2,
caractérisé en ce que
l'agrafe (32) est évidée entre sa racine (34) et son extrémité libre.

4. Appareil à air comprimé selon la revendication 2,
caractérisé en ce que
l'enveloppe du boîtier (26) de l'amortisseur de bruit (13) est pourvue d'un renfoncement (16), qui reçoit l'agrafe(32) qui fait ressort.

5. Appareil à air comprimé selon la revendication 1,
caractérisé en ce que
l'amortisseur de bruit (13) est équipé de plusieurs saillies (27) réparties sur son pourtour, et d'au moins une agrafe (32), disposée au milieu entre deux saillies voisines (27).

6. Appareil à air comprimé selon la revendication 5,
caractérisé en ce que
sur l'amortisseur de bruit (13) sont disposées quatre saillies (27) selon une répartition uniforme respectivement sur environ 45° du pourtour de l'enveloppe du boîtier, l'une au moins des agrafes (32) remplissant sensiblement l'intervalle entre deux saillies (27).
